# EUROPÄISCHE PATENTSCHRIFT

(11) **EP 2 878 190 B1**
(45) Veröffentlichungstag und Bekanntmachung des Hinweises auf die Patenterteilung: **26.07.2017**
(21) Anmeldenummer: 14167105.7
(22) Anmeldetag: 06.05.2014
(51) Int. Cl.: A01F 15/00, A01F 15/07, A01F 15/08

(54) **Landwirtschaftliche Rundballenpresse**
Agricultural round baler
Presse à balles rondes agricole

(30) Priorität: 01.08.2013 DE 102013108246
(43) Veröffentlichungstag der Anmeldung: 03.06.2015
(73) Patentinhaber: Usines CLAAS France, 57141 Metz (FR)
(72) Erfinder: Hasse, Lionel, 57420 Solgne (FR); Baros, Geoffroy, 90130 Montreux Château (FR); Marulier, Giles, 57220 Piblange (FR)
(74) Vertreter: Budach, Steffen

(56) Entgegenhaltungen:
- EP-A1- 2 050 330
- EP-A2- 1 396 187
- DE-C1- 19 806 460

## Beschreibung

Die Erfindung betrifft eine landwirtschaftliche Rundballenpresse gemäß dem Oberbegriff des Patentanspruchs 1.

Rundballenpressen werden in der Landwirtschaft dazu eingesetzt, halmartiges Erntegut wie Heu, Stroh, Grassilage und dergleichen zu Ballen zu pressen, um es anschließend platzsparend transportieren und lagern zu können. Eine Rundballenpresse wird dabei zumeist von einem Traktor über ein zu bearbeitendes Feld gezogen, wobei die Arbeitsaggregate der Presse vom Traktor über eine Zapfwelle angetrieben werden.

Zur Herstellung der zylinderförmigen Ballen wird in einer Rundballenpresse das halmartige Erntegut in einer Presskammer mittels am Umfang der Presskammer angeordneter Riemen und/oder Rollen aufgerollt. Bei Erreichen einer bestimmten Größe wird der Ballen mit Bindegarn oder einem Netz gebunden, bevor sich der hintere Teil der Presskammer (beispielsweise eine Klappe) öffnet und der fertige Rundballen aus der Presskammer herausrollen kann. Abhängig von der Bauform der Presse kann es bei Hangfahrt mit stark geneigtem Untergrund passieren, dass der fertige Rundballen die Presskammer nicht oder nur sehr langsam verlässt.

In der Praxis finden zunehmend Rundballenpressen Verbreitung, die zusammen mit einer Wickeleinrichtung als eine sogenannte Press-Wickelkombination ausgeführt sind. Dabei umfasst die Rundballenpresse einen zusätzlichen, bezogen auf die Längsrichtung der Ballenpresse hinter der Presskammer angeordneten Ballenwickler. Dieser dient dazu, den gebundenen Rundballen zusätzlich mit einem Folienmaterial zu umhüllen, insbesondere um das Erntegut zum Zweck der Silage luftdicht einzuschließen oder allgemein vor Außeneinflüssen zu schützen. Ein die Presskammer verlassender Rundballen rollt in diesem Fall - bevor er auf das Feld rollen kann - zunächst auf einen Wickeltisch, um anschließend auf diesem liegend mit der Folie eingewickelt zu werden. Beispielhaft sei dazu auf eine aus EP 2 050 330 A1 bekannte Press-Wickelkombination verwiesen. Eine Rundballenpresse gemäß dem Oberbegriff des Anspruchs 1 ist aus der Druckschrift DE-C1-198 06 460 bekannt. Eine mit einem Ballenwickler kombinierte Rundballenpresse weist eine große Baulänge auf. Da sich die Klappe der Presskammer auch bei auf dem Wickeltisch liegendem Ballen schließen lassen soll, um bereits während des Wickelvorgangs einen neuen Ballen zu pressen, lässt sich bei bekannten Press-Wickelkombinationen die Wickeleinrichtung nur mit einem deutlichen Abstand (welcher ein Öffnen der Klappe ermöglicht) zu der Presskammer anordnen. Wegen der großen Länge des Gespanns aus Traktor und Presse ist dieses nur schwer zu manövrieren und unübersichtlich. Auf dem Feld wie auf der Straße erhöht sich damit die Unfallgefahr sowie die Schwierigkeit enge Passagen zu durchfahren und/oder auf beschränktem Raum zu wenden. Zudem erfordert die große Baulänge viel Platz beim Parken während der Nichtbenutzung der Presse. Daneben erfordern bekannte Press-Wickelkombinationen zumeist eine aktive Übergabeeinrichtung, um den gepressten Ballen sicher an die Wickeleinrichtung zu übergeben.

Es ist eine Aufgabe der vorliegenden Erfindung, eine Rundballenpresse der eingangs genannten Art anzugeben, die bei verringerter Baulänge eine sichere Übergabe des gepressten Ballens aus der Presskammer zur Wickeleinrichtung ermöglicht.

Die Aufgabe wird gelöst durch eine Rundballenpresse mit den Merkmalen des Anspruchs 1. Diese zeichnet sich aus durch Mittel zur Veränderung einer Höhe der Presskammer gegenüber dem Untergrund. Dabei kann die Höhe der Presskammer gegenüber dem Untergrund auf unterschiedliche Weisen definiert sein. Beispielsweise handelt es sich dabei um einen Abstand (insbesondere Lotstrecke) zwischen der Mitte der Presskammer gegenüber einem ebenen Untergrund. Als Mitte der Presskammer kann dabei z.B. das Drehzentrum, also die Rotationsachse des gepressten Ballens angesehen werden. Es sind unterschiedliche Mittel denkbar, mit denen sich ein solcher Abstand zwischen Presskammer und Untergrund verändern lässt. Durch die Möglichkeit einer Veränderung der Höhe der Presskammer lässt sich - bei geeigneter Anordnung der Funktionselemente - insbesondere eine kürzere Baulänge der Ballenpresse realisieren, wenn nämlich beispielsweise die Presskammer in bestimmten Betriebssituationen angehoben wird und in anderen Betriebssituationen abgesenkt wird. So kann ein Anheben der Presskammer vorteilhaft dazu genutzt werden, dass trotz verhältnismäßig dicht hinter der Presskammer angeordneter Wickeleinrichtung zumindest vorübergehend ein ausreichender Platz zwischen Presskammer und Wickeleinrichtung geschaffen wird, um ein Öffnen und/oder Schließen einer der Presskammer zugeordneten Klappe ohne Kollision mit der Wickeleinrichtung oder einem davon aufgenommenen Ballen zu ermöglichen. Durch das Anheben der Presskammer wird dabei vorteilhaft die Ballenübergabe von der Presskammer auf die Wickeleinrichtung unterstützt, da ein stärkeres Gefälle zwischen Presskammer und Wickeleinrichtung geschaffen wird, so dass ein gepresster Ballen schwerkraftbedingt besonders sicher von der Presskammer in Richtung Wickeleinrichtung hinabrollen kann. Dies setzt voraus, dass sich bei einer Veränderung der Höhe der Presskammer die Höhe der Wickeleinrichtung gegenüber dem Untergrund nicht - oder zumindest nicht in dem Maße wie die Höhe der Presskammer - gegenüber dem Untergrund ändert. Andererseits kann ein Absenken der Presskammer vorteilhaft dazu genutzt werden, die Presskammer und ggf. damit baulich verbundene Gutaufnahmeeinrichtungen auf eine zur Gutaufnahme besonders geeignete, relativ niedrige Höhe gegenüber dem Untergrund zu bringen. Da in einer solchen Betriebssituation kein Ballenauswurf erfolgt und somit auch kein Öffnen einer Klappe der Presskammer erforderlich ist, behindert eine dichte Anordnung von Presskammer und Wickeleinrichtung den Betrieb der Ballenpresse nicht.

Zur Erzielung der zuvor beschriebenen Effekte ist vorteilhaft vorgesehen, dass die Höhe der Presskammer abhängig von Betriebszuständen der Rundballenpresse einstellbar ist. Bei denkbaren Betriebszuständen kann es sich beispielsweise handeln um die Zustände: "Pressen" (Aufnahme und Pressen von Erntegut in der Presskammer), "Ballenübergabe" (Übergabe eines gepressten Ballens von der Presskammer zur Wickeleinrichtung), "gedämpfte Fahrt" (Nutzung der Höhenverstellung zur Dämpfung der Ballenpresse), "Transport" (Transport und/oder Abstellen der Ballenpresse), "Wartung" (Wartung der Ballenpresse). Es kann dabei vorgesehen sein, dass die Presskammer manuell von einem Bediener, insbesondere unterstützt durch eine entsprechende Aktorik und eine elektronische Steuereinrichtung, auf die jeweilige Höhe verstellbar ist. Besonders vorteilhaft könnte der Betriebszustand selbsttätig von der elektronischen Steuereinrichtung erkannt werden. In diesem Fall wäre sogar eine selbsttätige Einstellung der Höhe sowie ggf. weiterer Maschinenparameter möglich.

Gemäß einer vorteilhaften Weiterbildung der Erfindung ist die Presskammer in der Höhe verstellbar zwischen zumindest einer abgesenkten Position, in der eine erleichterte Gutzuführung zur Presskammer gegeben ist und zumindest einer angehobenen Position, in der zwischen der Presskammer und der Wickeleinrichtung ein ausreichendes Gefälle besteht, um einen gepressten Rundballen schwerkraftbedingt von der Presskammer zur Wickeleinrichtung rollen zu lassen.

Zweckmäßigerweise sind dabei die Presskammer sowie die Aufnahme- und Fördereinrichtung, bevorzugt auch weitere Bestandteile der Ballenpresse, Teil einer baulichen Einheit, die insbesondere auch einen die Presskammer sowie die Aufnahme- und Fördereinrichtung aufnehmenden Pressenrahmen umfasst. Indem zumindest Presskammer sowie die Aufnahme- und Fördereinrichtung Teil einer baulichen Einheit sind, bewegen sich diese bei einer Höhenverstellung stets gemeinsam, so dass ein zwischen diesen Funktionseinheiten stattfindender Gutfluss (von Erntegut) trotz Veränderung der Höhe der Presskammer unangetastet bleibt.

Es sind verschiedene Maßnahmen denkbar, um die Höhe der Presskammer gegenüber dem Untergrund variieren zu können. Eine bevorzugte Möglichkeit sieht vor, dass das Fahrwerk gegenüber dem Pressenrahmen mittels einer Stützstruktur gelagert ist, die um eine quer zur Längsrichtung der Rundballenpresse horizontal verlaufende Rotationsachse schwenkbar mit dem Pressenrahmen verbunden ist. Auf diese Weise lässt sich mit konstruktiv einfachen Mitteln eine Höhenverstellbarkeit realisieren.

Die Mittel zur Veränderung der Höhe der Presskammer können auf weiterhin vorteilhafte Weise eine Aktorik umfassen, mittels derer sich dem Fahrwerk zugeordnete Bodeneingriffsmittel, beispielsweise Räder, relativ zur Presskammer bewegen lassen, um die Höhe der Presskammer gegenüber dem Untergrund beeinflussen zu können. Die Aktorik kann beispielsweise hydraulische Kolben-Zylinder-Einheiten aufweisen, womit sich die Höhe der Presskammer trotz deren verhältnismäßig hohen Gewichts präzise und dosiert einstellen lässt. In vorteilhafter Weise kann eine eingesetzte Aktorik auch zur Federung und/oder Dämpfung der Rundballenpresse im Fahrbetrieb einsetzbar sein. In diesem Fall kommt der Aktorik eine weitere Funktionalität zu. Weiterhin kann die Aktorik dazu nutzbar sein, die Presskammer auf eine ausreichende Höhe anzuheben, um unerwünschten Bodenkontakt von Bauteilen der Rundballenpresse zu vermeiden. Dies kann beispielsweise bei Fahrt auf besonders unebenem Untergrund von Nutzen sein und stellt eine weitere zusätzliche Funktionalität dar.

Zweckmäßigerweise ist weiterhin der Presskammer eine öffenbare Struktur, insbesondere eine Klappe zugeordnet ist, die sich zum Zweck des Auswurfs eines gepressten Ballens mittels eines Stellglieds öffnen lässt. Eine derartige Pressklappe kann derart gestaltet sein, dass diese beim Pressbetrieb als Teil der Presskammer dient, beispielsweise indem der öffenbaren Struktur Presselemente zugeordnet sind, die im geschlossenen Zustand der Presskammer die Presskammer nach außen begrenzen und zur Ausübung von Presskräften auf den entstehenden Ballen dienen.

Gemäß einer vorteilhaften Weiterbildung der Erfindung umfasst die Wickeleinrichtung zumindest einen Wickeltisch zur Aufnahme eines Rundballens, der mittels einer Halteeinrichtung gegenüber dem Fahrwerk gelagert ist. Eine konstruktiv bevorzugte Ausführung sieht dabei vor, dass der Wickeltisch einen festen Abstand zu einer hinteren Achse der Ballenpresse aufweist. Vorteilhaft ist die Halteeinrichtung dazu so gelagert, dass sie sich um eine Achse des hinteren Rads des Fahrwerks schwenken lässt.

Gemäß einer weiterhin vorteilhaften Weiterbildung der Erfindung weist der Wickeltisch eine Aufnahme für einen Rundballen auf und ist um eine etwa vertikal verlaufende Achse drehbar gegenüber der Halteeinrichtung gelagert, wobei dem Wickeltisch ein Antrieb zugeordnet ist, der den Wickeltisch mitsamt aufgenommenem Rundballen um die Achse rotieren lassen kann, um den Rundballen mit einem ortsfest gelagerten Wickelmaterial zu umhüllen. Eine derartige Gestaltung bringt den Vorteil mit sich, dass das Wickelmaterial ortsfest und damit konstruktiv einfach gelagert werden kann. Weiterhin entfällt die Notwendigkeit eines sich um den Ballen drehenden Wickelarms. Die insgesamt erforderliche Baulänge der Ballenpressen verkürzt sich damit abermals, zudem verringert sich die Gefahr von Unfällen aufgrund von schnell rotierenden Bauteilen.

Vorzugsweise sind der Halteeinrichtung (des Wickeltischs) Stellmittel zugeordnet, mittels derer sich der Wickeltisch abhängig von der Betriebssituation der Rundballenpresse in verschiedene Stellungen, insbesondere in eine beim Pressen bevorzugte Stellung, eine bei der Ballenübergabe bevorzugte Stellung, eine beim Transport bevorzugte Stellung und/oder eine zu Wartungszwecken bevorzugte Stellung bringen lässt. Die Stellmittel bewirken insbesondere ein Schwenken der Halteeinrichtung um die Achse des hinteren Rads des Fahrwerks, so dass stets ein konstanter Abstand zur hinteren Achse gewährleistet ist.

Es kann weiterhin vorgesehen sein, dass der Pressenrahmen mittels einer Deichsel an ein Zugfahrzeug kuppelbar ist, wobei die Deichsel gegenüber dem Pressenrahmen aktiv höhenverstellbar ist, insbesondere indem die Deichsel um eine quer zur Längsrichtung der Rundballenpresse horizontal verlaufende Rotationsachse schwenkbar mit dem Pressenrahmen verbunden und mittels eines Stellglieds in deren Winkel zum Pressenrahmen einstellbar ist. Durch eine solche Verstellbarkeit des Höhenwinkels der Deichsel kann auf vorteilhafte Weise ein Neigungsausgleich erzielt werden, der beispielsweise durch eine reine Höhenverstellung der Presskammer entstehen würde. Somit kann sichergestellt werden, dass die Ballenpresse auch bei verschiedenen Höheneinstellungen der Presskammer insgesamt einen etwa gleichbleibenden Winkel gegenüber dem Untergrund aufweist.

Die beschriebene Verstellbarkeit der Höhe der Presskammer gegenüber dem Untergrund kann, wie zuvor erläutert, zu unterschiedlichen Zwecken vorteilhaft eingesetzt werden. Gemäß einer vorteilhaften Weiterbildung der Erfindung ist die Ballenpresse mit einer Steuereinrichtung ausgestattet, die betreibbar ist, die Rundballenpresse durch Ansteuerung zumindest einer Aktorik der Presskammer und/oder der öffenbaren Struktur und/oder des Wickeltischs und/oder der Deichsel in eine anwendungsspezifische Konfiguration zu bringen. Mit anderen Worten ist die Steuereinrichtung dazu nutzbar, neben einer Höheneinstellung der Presskammer weitere Maschineneinstellungen an der Ballenpresse vorzunehmen, um so die Ballenpresse in eine Konfiguration zu bringen, die sich für einen bestimmten Einsatzzweck besonders eignet.

Die Erfindung wird nachfolgend anhand eines Ausführungsbeispiels näher erläutert. Zur Erläuterung der Wirkungen und Effekte sei auf die beigefügte Zeichnung verwiesen. In den dortigen Figuren zeigt:
- Fig. 1: eine Rundballenpresse in perspektivischer schematischer Ansicht beim Vorgang des Pressens eines Rundballens,
- Fig. 2: die Rundballenpresse beim Vorgang der Ballenübergabe,
- Fig. 3: die Rundballenpresse bei Fahrt über Gelände mit einem gepressten Ballen auf dem Wickeltisch,
- Fig. 4: die Rundballenpresse beim Transport in schematischer Seitenansicht,
- Fig. 5: die Rundballenpresse bei der Wartung in schematischer Seitenansicht.

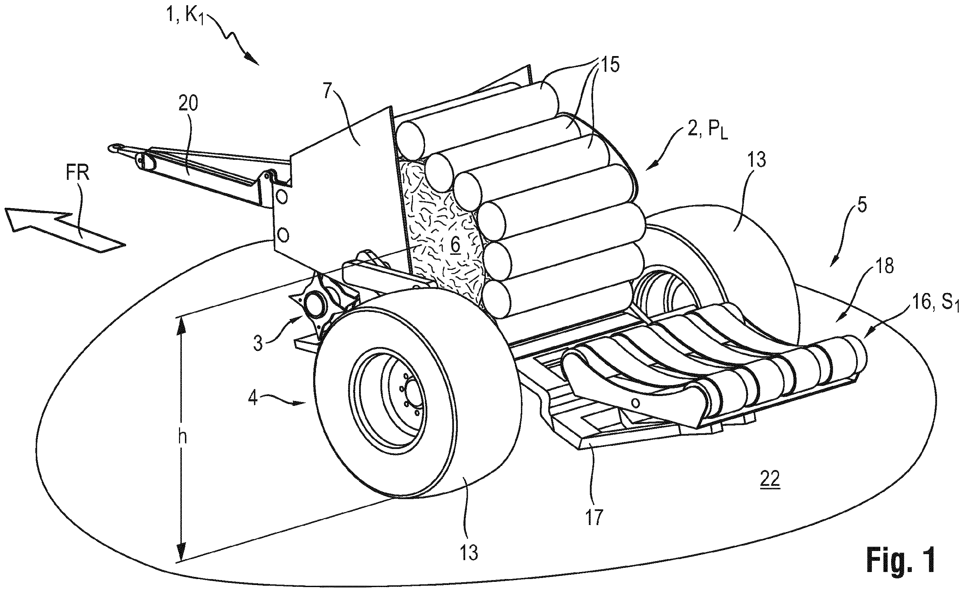

In Fig. 1 ist eine Rundballenpresse 1 in schematischer perspektivischer Ansicht von schräg hinten gezeigt. Die Rundballenpresse 1 weist eine zentral angeordnete Presskammer 2 auf, in der im abgebildeten Zustand ein Rundballen 6 mit zylindrischer Grundform gepresst wird. Dazu nimmt die Rundballenpresse 1 Erntegut über eine für sich gesehen bekannte und daher nicht gezeigte Aufnahmeeinrichtung auf, die sich bezogen auf eine angezeigte Fahrtrichtung FR, die auch der Längsrichtung der Ballenpresse 1 entspricht, frontseitig an der Ballenpresse 1, und somit vor der Presskammer 2, befindet. Nach Aufnahme des Ernteguts mittels der Aufnahmeeinrichtung gelangt dieses zu einem (optionalen) Schneidrotor 3, um von dort weiter in die Presskammer 2 gefördert zu werden. Die Presskammer 2 und der Schneidrotor 3 werden jeweils seitlich von einem Pressenrahmen 7 begrenzt, an welchem auch die (nicht gezeigte) Aufnahmeeinrichtung befestigt ist. Weiterhin ist eine Deichsel 20 an dem Pressenrahmen 7 befestigt, die bezogen auf die Fahrtrichtung FR nach vorn von der Ballenpresse 1 abragt.

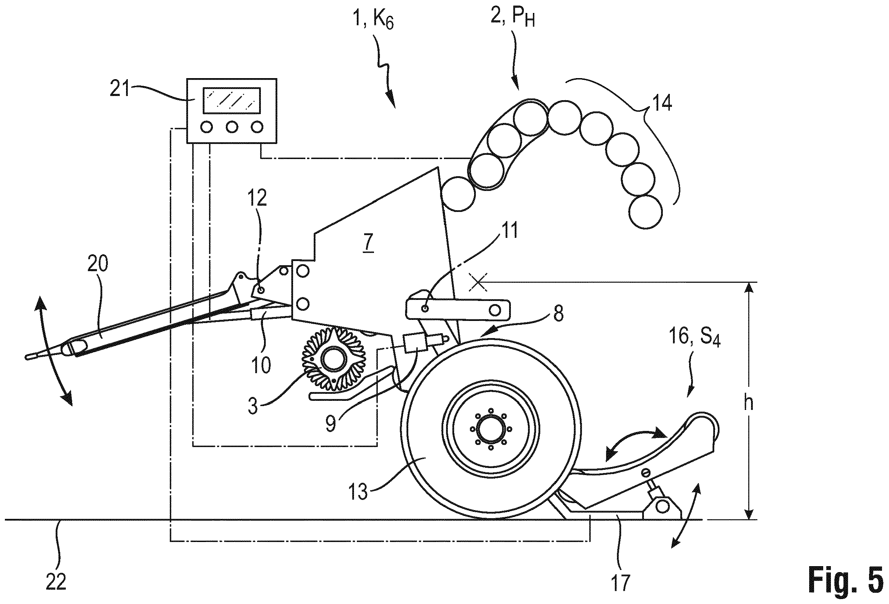

Die Ballenpresse 1 lässt sich mittels der Deichsel 20 von einem (nicht dargestellten) Zugfahrzeug in der Fahrtrichtung FR über einen Untergrund 22, beispielsweise ein zu bearbeitendes Feld ziehen. Zu diesem Zweck ist der Ballenpresse 1 ein Fahrwerk 4 zugeordnet, mit welchem sich die Ballenpresse 1 gegenüber dem Untergrund 22 abstützt. Das Fahrwerk 4 umfasst zwei seitlich des Pressenrahmens 7 angeordnete Räder 13 mit gemeinsamer Drehachse. Mittels einer in Fig. 5 teilweise sichtbaren Stützstruktur 8 (in Fig. 1 verdeckt und daher nicht sichtbar) ist das Fahrwerk 4 gegenüber dem Pressenrahmen 7 gelagert. Die Stützstruktur 8 lässt sich um eine Rotationsachse 11 gegenüber dem Pressenrahmen 7 verschwenken, die quer zur Längsrichtung (FR) der Rundballenpresse 1 verläuft. Wie Fig. 5 zeigt, ist die Stützstruktur 8 über eine Aktorik, die hier jeweils seitlich angeordnete hydraulische Kolben-Zylinder-Einheiten 9 umfasst, in deren Schwenkwinkel gegenüber dem Pressenrahmen 7 verschwenkbar. Somit lassen sich durch Betätigung der Kolben-Zylinder-Einheiten 9 die Räder 13 der Ballenpresse 1 relativ zum Pressrahmen 7 - und damit zur Presskammer 2 - bewegen. Im gezeigten Ausführungsbeispiel der Fig. 1 bis 5 können sich die Räder 13 bei Betätigung durch die Kolben-Zylinder-Einheiten 9 entlang einer durch die Rotation der Stützstruktur 8 um den Drehpunkt 11 vorgegebenen Teilkreisbahn bewegen. Je nach Stellung der Kolben-Zylinder-Einheiten 9 lässt sich auf diese Weise die Höhe der Presskammer 2 gegenüber dem Untergrund 22 beeinflussen.

Während die Presskammer 2 seitlich durch den Pressenrahmen 7 begrenzt wird, ist die Presskammer 2 umfangsseitig durch eine Vielzahl von Pressrollen 15 begrenzt. Diese umgeben den zu pressenden Ballen 6 somit an dessen Umfangsfläche, wie in Fig. 1 gezeigt.

Heckseitig, und damit bezogen auf die Fahrtrichtung FR der Ballenpresse 1 hinter der Presskammer 2 ist an der Ballenpresse 1 eine Wickeleinrichtung 5 angeordnet. Mit dieser lässt sich ein zuvor in der Presskammer 2 gepresster Rundballen 6 mit Wickelmaterial, beispielsweise einer Wickelfolie umhüllen. Die Wickeleinrichtung 5 verfügt dazu über einen Wickeltisch 16, der eine muldenförmige Ballenaufnahme 18 zur Aufnahme eines Ballens 6 aufweist. Die Ballenaufnahme 18 ist so gestaltet, dass ein gepresster Rundballen 6 auf dieser mit seiner Umfangsfläche zum Liegen kommen kann. Der Wickeltisch 16 ist über eine Halteeinrichtung 17 gegenüber dem Fahrwerk 4 der Ballenpresse 1 gelagert. Dabei ist die Halteeinrichtung 17 so mit dem Fahrwerk 5 verbunden, dass sich diese um die Achse der Räder 13 schwenken lässt. Der Halteeinrichtung 17 sind Stellmittel zugeordnet, mittels derer sich der Wickeltisch 16 in verschiedene Stellungen bringen lässt. Es kann sich hierbei beispielsweise um hydraulisch betätigbare Stellmittel (Zylinder-Kolben-Einheiten) handeln. Der Wickeltisch 16 kann auf diese Weise verschiedene Höhenstellungen einnehmen, beispielsweise eine beim Pressen bevorzugte Stellung S₁, eine bei der Ballenübergabe bevorzugte Stellung S₂, eine beim Transport bevorzugte Stellung S₃ und/oder eine zu Wartungszwecken bevorzugte Stellung S₄.

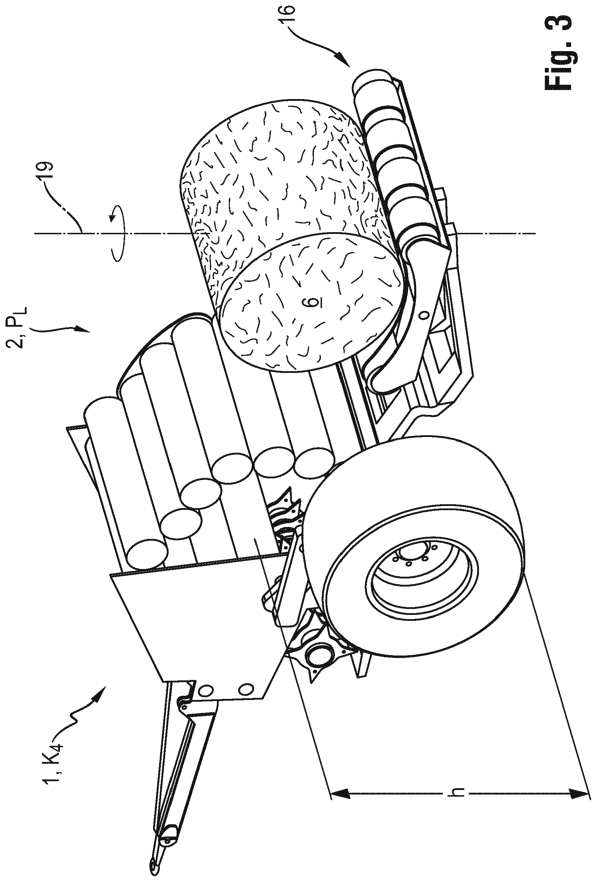

Weiterhin ist der Wickeltisch 16 um eine etwa vertikal verlaufende Achse 19 (eingezeichnet in Fig. 3) drehbar gegenüber der Halteeinrichtung 17 gelagert. Ein auf der Ballenaufnahme 18 liegender Rundballen 6 kann somit um die Achse 19 in Rotation versetzt werden, wozu dem Wickeltisch 16 ein entsprechender (hier nicht gezeigter Antrieb) zugeordnet ist. Der Rundballen 6 kann auf diese Weise mit einem Wickelmaterial eingehüllt werden, das ortsfest an der Ballenpresse 1 gelagert ist und das mit Drehung des Rundballens 6 bedarfsgerecht an den Rundballen 6 abgegeben wird. Übrige für sich gesehen bekannte Einrichtungen einer Wickeleinrichtung, wie beispielsweise eine Schneideinrichtung für Wickelmaterial und dergleichen sind im Zusammenhang dieser Erfindung nicht näher zu erläutern, sondern können als bekannt vorausgesetzt werden.

Zur weiteren Erläuterung des Aufbaus der Ballenpresse 1 sei nun auf Fig. 5 verwiesen. Demnach ist die Deichsel 20 mit dem Pressenrahmen 7 um eine quer zur Fahrtrichtung FR horizontal verlaufende Rotationsachse 12 gelenkig verbunden. Die Deichsel 20 lässt sich somit in deren Höhe verstellen, wie durch den gekrümmten Doppelpfeil angedeutet. Zur Verstellung dient eine zwischen Pressenrahmen 7 und Deichsel 20 wirkende Kolben-Zylinder-Einheit 10. Wie nachfolgend noch zu erläutern, kann die so realisierte Höhenverstellung der Deichsel 20 vorteilhaft dazu genutzt werden, einen Neigungsausgleich der Rundballenpresse 1 durchzuführen, um insbesondere bei verschiedener Höhe h der Presskammer 2 eine gleichbleibende Neigung der Rundballenpresse 1 aufrechtzuerhalten.

Der Darstellung gemäß Fig. 5 ist weiterhin zu entnehmen, dass ein Teil der Pressrollen 15, im gezeigten Beispiel acht der Pressrollen 15, einer beweglichen Struktur in Form einer Auswurfklappe 14 zugeordnet sind. Diese Auswurfklappe 14 lässt sich mittels eines Stellglieds bewegen, insbesondere schwenken, um die Presskammer 2 heckseitig zu öffnen. Ein Öffnen der Presskammer 2 kann zum Zweck des Auswurfs eines gepressten Rundballens 6 erfolgen und/oder kann dazu erfolgen, beispielsweise zu Wartungszwecken einen einfachen Zugang zu Funktionselementen der Ballenpresse 1 zu erlangen.

Der Rundballenpresse 1 ist weiterhin eine Steuereinrichtung 21 zugeordnet. Hierbei handelt es sich um eine elektronische Einrichtung, die neben einer Signalverarbeitungseinheit eine Anzeige- und Eingabeeinheit aufweist. Die Steuereinrichtung 21 kann beispielsweise an einem von außen leicht zugänglichen Bereich der Rundballenpresse 1 angebracht sein, so dass ein Bediener schnellen Zugriff darauf hat. Alternativ oder ergänzend kann die Steuereinrichtung 21 oder zumindest deren Anzeige- und Eingabeeinheit an einem Zugfahrzeug oder an einem mobilen Gerät (Funkfernbedienung) angeordnet sein.

Die Steuereinrichtung 21 ist über Signalleitungen (gestrichelte Linien) mit der Aktorik der Rundballenpresse 1 verbunden, um diese bedarfsweise ansteuern zu können. So lassen sich über die Steuereinrichtung 21 die Kolben-Zylinder-Einheiten 9 zur Höhenverstellung der Presskammer 2, die Kolben-Zylinder-Einheit 10 zur Höhenverstellung der Deichsel 20, die Stellmittel der Halteeinrichtung 17 zur Höhenverstellung des Wickeltischs 16 und das Stellglied der Auswurfklappe 14 ansteuern. Damit ist die Steuereinrichtung 21 betreibbar, die Rundballenpresse 1 durch entsprechende Ansteuerung zumindest eines der genannten Aktoren in eine anwendungsspezifische Konfiguration Kₙ zu bringen. Die Fig. 1 bis 5 zeigen verschiedene Konfigurationen K₁ bis K₆, in welche sich die Rundballenpresse 1 bringen lässt. Dazu nun im Einzelnen:
In Fig. 1 befindet sich die Rundballenpresse 1 in einer Konfiguration K₁, welche bevorzugt zum Pressen eines Rundballens 6 eingenommen wird. Die Presskammer 2 ist mitsamt Pressenrahmen 7, Schneidrotor 3 und (nicht gezeigter) Erntegutaufnahmeeinrichtung auf eine verhältnismäßig niedrige Höhe h gegenüber dem Untergrund 22 in eine Position P_{L} abgesenkt. In dieser Position P_{L} ist aufgrund des geringen Höhenunterschieds zwischen Untergrund 22 und den Erntegut führenden Einrichtungen der Rundballenpresse 1 (Gutaufnahme- und Fördereinrichtungen wie unter anderem der Schneidrotor 3) eine leichte und sichere Gutzuführung zur Presskammer 2 möglich. Der Wickeltisch 16 befindet sich in einer Stellung S₁.

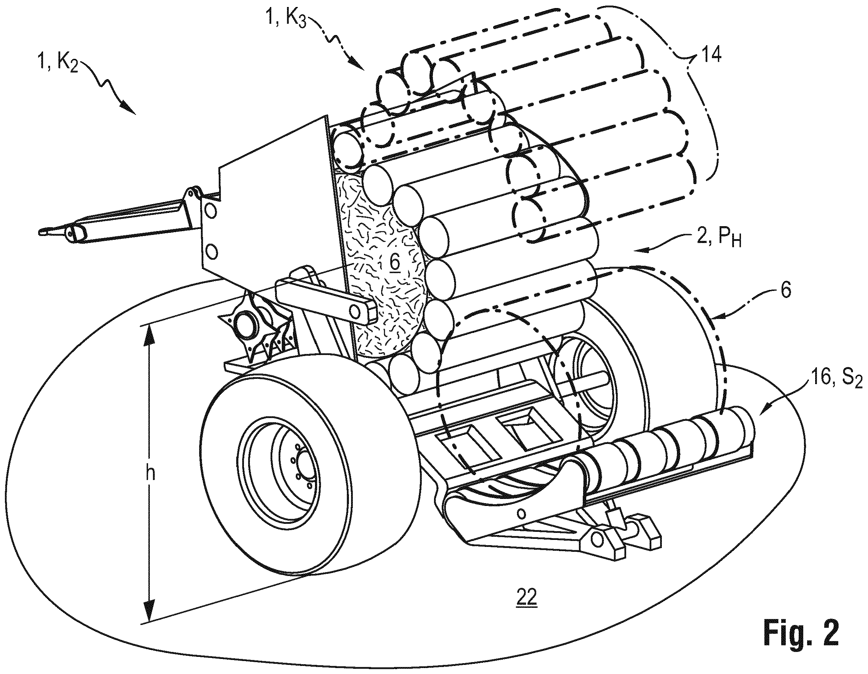

In Fig. 2 befindet sich die Rundballenpresse 1 zunächst in einer Konfiguration K₂, welche bevorzugt zu Beginn einer Ballenübergabe von der Presskammer 2 zur Wickeleinrichtung 5 eingenommen wird. Die Presskammer 2 ist dazu durch Ansteuerung der Kolben-Zylinder-Einheiten 9 auf eine verhältnismäßig große Höhe h gegenüber dem Untergrund 22 angehoben worden und befindet sich somit in einer Position P_{H}. In dieser Position P_{H} besteht zwischen der Presskammer 2 und der Wickeleinrichtung 5 ein ausreichendes Gefälle, um den gepressten Ballen 6 schwerkraftbedingt von der Presskammer 2 zur Wickeleinrichtung 5 rollen zu lassen. Zu diesem Zweck ist der Wickeltisch 16 durch Ansteuerung der zugehörigen Stellmittel in eine Stellung S₂ gebracht worden, die sich zum Empfang des Rundballens 6 eignet. Da in der Konfiguration K₂ die Auswurfklappe 14 noch geschlossen ist, findet jedoch noch keine Ballenübergabe statt.

In einem nächsten, ebenfalls in Fig. 2 dargestellten Schritt befindet sich die Rundballenpresse 1 in einer Konfiguration K₃, in welcher die Auswurfklappe 14 durch Ansteuerung des zugehörigen Stellglieds geöffnet ist. Infolge der Öffnung der Auswurfklappe 14 beginnt der noch in der Presskammer 2 befindliche Rundballen 6 nun schwerkraftbedingt in Richtung der Wickeleinrichtung 5 abwärts zu rollen bis er auf dem Wickeltisch 16 zum Liegen kommt. Aufgrund der noch immer angehobenen Position P_{H} der Presskammer 2 besteht zwischen dem auf dem Wickeltisch 16 liegenden Rundballen 6 und der Auswurfklappe 14 (bzw. der davon überstrichenen Bewegungsbahn) ein ausreichender Abstand, so dass sich die Auswurfklappe 14 auch bei auf dem Wickeltisch 16 liegenden Rundballen 6 schließen lässt. Es kann vorgesehen sein, dass der Wickeltisch 16 kippbar an der Halteeinrichtung 17 gelagert ist, so dass der aufgenommene Rundballen 6 zuvor durch Kippen des Wickeltischs 16 von einer leicht schrägen Lage (gezeigt in Fig. 2) in eine horizontale Lage (gezeigt in Fig. 3) gebracht wird, um ein Schließen der Auswurfklappe 14 zu erleichtern. Auch dieser Kippvorgang wird bevorzugt durch Ansteuerung von der Steuereinrichtung 21 veranlasst.

Während eines sich anschließenden Wickelvorgangs kann die Rundballenpresse 1 vorteilhaft bereits zum Pressen eines neuen Rundballens genutzt werden. Ein derartiger Zustand ist in Fig. 3 gezeigt.

In Fig. 3 befindet sich die Rundballenpresse 1 in einer Konfiguration K₄, welche nach einer Ballenübergabe von der Presskammer 2 zur Wickeleinrichtung 5 eingenommen wird. Die Auswurfklappe 14 ist nun wieder vollständig geschlossen und die Presskammer 2 ist wieder auf eine niedrigere Höhe h abgesenkt worden. Mit dieser Position P_{L} der Presskammer 2 kann die Rundballenpresse 1 bereits wieder Erntegut aufnehmen und pressen, während sich auf dem Wickeltisch 16 noch ein mit Wickelmaterial zu umhüllender Rundballen 6 befindet. Der Wickeltisch 16 kann zu diesem Zweck um die Rotationsachse 19 gedreht werden, damit an der Ballenpresse 1 bevorratetes Wickelmaterial an den sich drehenden Rundballen abgegeben wird.

Die an der Ballenpresse 1 vorgesehene Höhenverstellung über die Kolben-Zylinder-Einheiten 9 kann in diesem in Fig. 3 gezeigten Zustand K₄ vorteilhaft auch dazu genutzt werden, eine gefederte Lagerung der Rundballenpresse 1 bereitzustellen. Dazu könnten die Kolben-Zylinder-Einheiten 9 im Sinne elastischer Federelemente dazu genutzt werden, die Räder 13 der Rundballenpresse 1 mit einem vorgebbaren Federweg beweglich gegenüber dem Rahmen 7 zu halten, um auf diese Weise Bodenunebenheiten des Untergrund 22 abzufedern. Einem Hinunterfallen oder ungewollten Bewegen des auf dem Wickeltischs 16 liegenden Rundballens 6 kann somit vorteilhaft entgegengewirkt werden. Die Kolben-Zylinder-Einheiten 9 könnten dabei vorteilhaft sogar Teil eines Feder-Dämpfer-Systems sein.

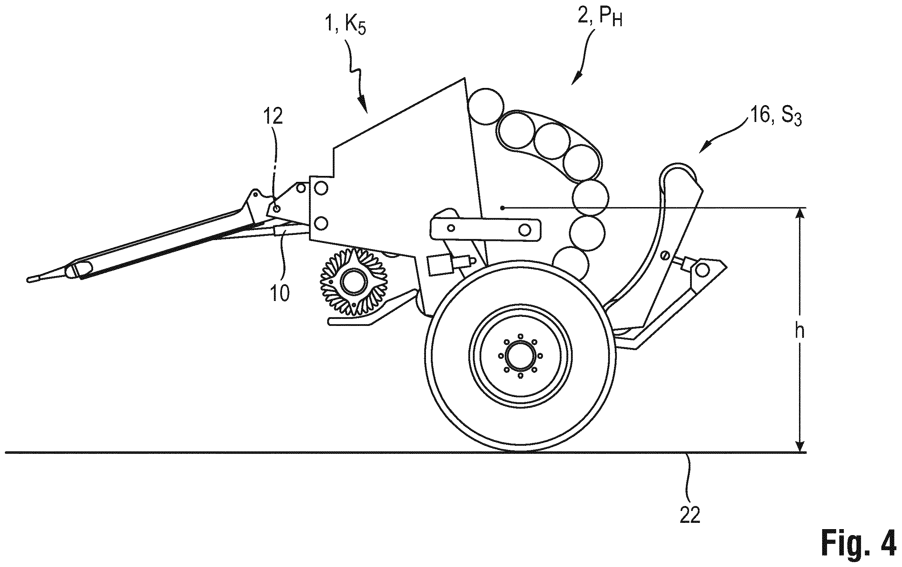

In Fig. 4 befindet sich die Rundballenpresse 1 nun in einer Konfiguration K₅, welche bevorzugt zum Transport und/oder zur Lagerung der Rundballenpresse 1 eingenommen wird. Die Presskammer 2 ist dazu mitsamt Pressenrahmen 7, Schneidrotor 3 und (nicht gezeigter) Erntegutaufnahmeeinrichtung auf eine verhältnismäßig große Höhe h gegenüber dem Untergrund 22 angehoben, um eine Position P_{H} einzunehmen. Zur Aufrechterhaltung des Neigungswinkels der Rundballenpresse 1 gegenüber dem Untergrund 22 ist die Deichsel 20 mittels der Kolben-Zylinder-Einheit 10 in eine niedrigere Stellung gebracht worden. Zudem ist der Wickeltisch 16 in eine angehobene Stellung S₃ geschwenkt worden, in welcher der Wickeltisch 16 nahezu an der Auswurfklappe 14 anliegt. Die so eingenommene Konfiguration K₅ bietet den Vorteil einer kurzen Gesamtlänge der Rundballenpresse 1. Die Rundballenpresse 1 lässt sich in dieser Konfiguration K₅ einfacher transportieren, manövrieren und/oder einfacher auf begrenztem Raum abstellen.

In Fig. 5 befindet sich die Rundballenpresse 1 in einer Konfiguration K₆, welche vorteilhaft zur Wartung der Rundballenpresse 1 eingenommen werden kann. Die Presskammer 2 ist dazu mitsamt Pressenrahmen 7, Schneidrotor 3 und (nicht gezeigter) Erntegutaufnahmeeinrichtung auf eine verhältnismäßig große Höhe h gegenüber dem Untergrund 22 angehoben, um eine Position P_{H} einzunehmen. Zur Aufrechterhaltung des Neigungswinkels der Rundballenpresse 1 gegenüber dem Untergrund 22 ist die Deichsel 20 mittels der Kolben-Zylinder-Einheit 10 in eine niedrigere Stellung gebracht worden. Um eine für Wartungsarbeiten gewünschte einfache Zugänglichkeit zu Funktionselementen beispielsweise innerhalb der Presskammer 2 und/oder im Bereich des Schneidrotors 3 zu erlangen, ist die Auswurfklappe 14 geöffnet und ist der Wickeltisch 16 in eine vollständig abgesenkte Stellung S₄ gebracht worden. Damit besteht eine einfache Zugänglichkeit zum Inneren der Rundballenpresse 1.

Mit Hilfe der Steuereinrichtung 21 lässt sich die Ballenpresse 1 je nach Betriebssituation in die verschiedenen Konfigurationen K_{1 bis 6} bringen. Dies kann manuell durch einen Bediener erfolgen, indem beispielsweise der Bediener eine jeweils einzunehmende Konfiguration auswählt und die Steuereinrichtung 21 durch Ansteuerung erforderlicher Aktoren diese Konfiguration einstellt. Vorteilhaft kann dies jedoch auch teil- oder vollautomatisch erfolgen. Dazu können beispielsweise zumindest die Konfigurationen K₁ bis K₄, die während eines Feldeinsatzes wiederholt erforderlich sind, selbsttätig von der Steuereinrichtung 21 angesteuert werden. Es kann vorgesehen sein, dass die Steuereinrichtung 21 zu diesem Zweck sensorisch erfasste Maschinenzustände überwacht, um daraus auf das Erreichen bestimmter Betriebssituationen zu schließen. So könnte beispielsweise aus dem Erreichen eines bestimmten Pressdrucks innerhalb der Presskammer 2 geschlossen werden, dass ein darin befindlicher Ballen 6 an die Wickeleinrichtung 5 zu übergeben ist. Die Steuereinrichtung 21 könnte daraufhin beispielsweise veranlassen, dass die Ballenpresse aus einer Konfiguration K₁ zunächst in eine Konfiguration K₂, dann (nach Erreichen) in eine Konfiguration K₃ und schließlich (bei Feststellung, dass der Ballen 6 auf dem Wickeltisch 16 liegt) in eine Konfiguration K₄ verbracht wird. Für das Einnehmen der Konfigurationen K₅ und K₆ ist bevorzugt eine manuelle Bedieneranweisung erforderlich.

Mit der anhand des Ausführungsbeispiels beschriebenen Rundballenpresse werden verschiedene Vorteile und Wirkungen erzielt. Durch die vorgesehene Höhenverstellbarkeit der Presskammer lässt sich insgesamt eine kürzere Baulänge erreichen. Insbesondere kann zu Transportzwecken eine Konfiguration eingenommen werden, in welcher die Presse eine nochmals kürzere Baulänge aufweist als beim Pressen. Die vorgesehene Höhenverstellbarkeit der Presskammer lässt vorteilhaft den Gutstrom zwischen Aufnahmeeinrichtung und Presskammer angetastet. Aufgrund des starken Gefälles zwischen Presskammer und Wickeleinrichtung entfällt die Notwendigkeit sonstiger aktiver Ballenübergabehilfen und es wird eine kurze Übergabezeit erreicht. Zudem lassen sich zusätzliche Funktionen (Federung/Dämpfung, Konfiguration zu Wartung, Transport) bei verhältnismäßig einfacher Kinematik realisieren.

### Bezugszeichenliste

- 1: Rundballenpresse
- 2: Presskammer
- 3: Schneidrotor
- 4: Fahrwerk
- 5: Wickeleinrichtung
- 6: Rundballen
- 7: Pressenrahmen
- 8: Stützstruktur
- 9: Kolben-Zylinder-Einheit
- 10: Kolben-Zylinder-Einheit
- 11: Rotationsachse
- 12: Rotationsachse
- 13: Rad
- 14: Auswurfklappe
- 15: Pressrolle
- 16: Wickeltisch
- 17: Halteeinrichtung
- 18: Ballenaufnahme
- 19: Rotationsachse
- 20: Deichsel
- 21: Steuereinrichtung
- 22: Untergrund
- h: Höhe der Presskammer
- P_{L}: abgesenkte Position für Aufnahme
- P_{H}: angehobene Position für Transfer
- S₁: Stellung beim Pressen
- S₂: Stellung bei Übergabe
- S₃: Stellung beim Transport
- S₄: Stellung für Wartung
- FR: Fahrtrichtung der Presse
- K_{1...7}: Konfiguration der Rundballenpresse

## Patentansprüche

1. Landwirtschaftliche Rundballenpresse (1) mit einer Presskammer (2), der eine Aufnahme- und Fördereinrichtung (3) zur Zuführung von Erntegut zugeordnet ist, mit einer außerhalb der Presskammer (2) angeordneten Wickeleinrichtung (5) zum Umhüllen gepresster Rundballen (6) mit Wickelmaterial und mit einem Fahrwerk (4) zum Abstützen der Rundballenpresse (1) gegenüber einem Untergrund (22) und mit Mitteln (9, 10) zur Veränderung einer Höhe (h) der Presskammer (2) gegenüber dem Untergrund (22), wobei die Höhe (h) der Presskammer (2) abhängig von Betriebszuständen der Rundballenpresse (1) einstellbar ist, **dadurch gekennzeichnet, dass** die Presskammer (2) in der Höhe (h) verstellbar ist zwischen zumindest einer abgesenkten Position (PA), in der eine erleichterte Gutzuführung zur Presskammer (2) gegeben ist, und zumindest einer angehobenen Position (PT), in der zwischen der Presskammer (2) und der Wickeleinrichtung (5) ein ausreichendes Gefälle besteht, um einen gepressten Rundballen (6) schwerkraftbedingt von der Presskammer (2) zur Wickeleinrichtung (5) rollen zu lassen.

2. Rundballenpresse nach Anspruch 1, **dadurch gekennzeichnet, dass** die Presskammer (2) sowie die Aufnahme- und Fördereinrichtung (3) Teil einer baulichen Einheit sind, die insbesondere auch einen die Presskammer (2) sowie die Aufnahme- und Fördereinrichtung (3) aufnehmenden Pressenrahmen (7) umfasst.

3. Rundballenpresse nach Anspruch 1 oder 2, **dadurch gekennzeichnet, dass** das Fahrwerk (4) gegenüber dem Pressenrahmen (7) mittels einer Stützstruktur (8) gelagert ist, die um eine quer zur Längsrichtung (FR) der Rundballenpresse (1) horizontal verlaufende Rotationsachse (11) schwenkbar mit dem Pressenrahmen (7) verbunden ist.

4. Rundballenpresse nach einem der vorigen Ansprüche, **dadurch gekennzeichnet, dass** die Mittel zur Veränderung der Höhe (h) der Presskammer (2) eine Aktorik, vorzugsweise zwei hydraulische Kolben-Zylinder-Einheiten (9) aufweisend, umfassen, womit sich dem Fahrwerk (4) zugeordnete Bodeneingriffsmittel (13) relativ zur Presskammer (2) bewegen lassen, um die Höhe der Presskammer (2) gegenüber dem Untergrund (22) beeinflussen zu können.

5. Rundballenpresse nach Anspruch 4, **dadurch gekennzeichnet, dass** die Aktorik (9) auch zur Federung und/oder Dämpfung der Rundballenpresse (1) im Fahrbetrieb einsetzbar ist.

6. Rundballenpresse nach Anspruch 4 oder 5, **dadurch gekennzeichnet, dass** die Aktorik (9) dazu nutzbar ist, die Presskammer (2) auf eine ausreichende Höhe (h) anzuheben, um unerwünschten Bodenkontakt von Bauteilen der Rundballenpresse (1) zu vermeiden.

7. Rundballenpresse nach einem der vorigen Ansprüche, **dadurch gekennzeichnet, dass** der Presskammer (2) eine offenbare Struktur, insbesondere eine Klappe (14) zugeordnet ist, die sich zum Zweck des Auswurfs eines gepressten Ballens (6) mittels eines Stellglieds öffnen lässt.

8. Rundballenpresse nach einem der Ansprüche 1 bis 7, **dadurch gekennzeichnet, dass** die Wickeleinrichtung (5) zumindest einen Wickeltisch (16) zur Aufnahme eines Rundballens (6) umfasst, der mittels einer Halteeinrichtung (17) gegenüber dem Fahrwerk (4) gelagert ist.

9. Rundballenpresse nach Anspruch 8, **dadurch gekennzeichnet, dass** der Wickeltisch (16) eine Aufnahme (18) für einen Rundballen (6) aufweist und um eine etwa vertikal verlaufende Achse (19) drehbar gegenüber der Halteeinrichtung (17) gelagert ist, wobei dem Wickeltisch (16) ein Antrieb zugeordnet ist, der den Wickeltisch (16) mitsamt aufgenommenem Rundballen (6) um die Achse (19) rotieren lassen kann, um den Rundballen (6) mit einem ortsfest gelagerten Wickelmaterial zu umhüllen.

10. Rundballenpresse nach Anspruch 9, **dadurch gekennzeichnet, dass** der Halteeinrichtung (17) Stellmittel zugeordnet sind, mittels derer sich der Wickeltisch (16) abhängig von der Betriebssituation der Rundballenpresse (1) in verschiedene Stellungen (S), insbesondere in eine beim Pressen bevorzugte Stellung (S₁), eine bei der Ballenübergabe bevorzugte Stellung (S₂), eine beim Transport bevorzugte Stellung (S₃) und/oder eine zu Wartungszwecken bevorzugte Stellung (S₄) bringen lässt.

11. Rundballenpresse nach einem der vorigen Ansprüche, **dadurch gekennzeichnet, dass** der Pressenrahmen (7) mittels einer Deichsel (20) an ein Zugfahrzeug kuppelbar ist, wobei die Deichsel (20) gegenüber dem Pressenrahmen (7) aktiv höhenverstellbar ist, insbesondere indem die Deichsel (20) um eine quer zur Längsrichtung (FR) der Rundballenpresse (1) horizontal verlaufende Rotationsachse (12) schwenkbar mit dem Pressenrahmen (7) verbunden und mittels eines Stellglieds (10) in deren Winkel zum Pressenrahmen (7) einstellbar ist.

12. Rundballenpresse nach einem der vorigen Ansprüche, **gekennzeichnet durch** eine Steuereinrichtung (21), die betreibbar ist, die Rundballenpresse (1) durch Ansteuerung zumindest einer Aktorik der Presskammer (2) und/oder der öffenbaren Struktur (14) und/oder des Wickeltischs (16) und/oder der Deichsel (20) in eine anwendungsspezifische Konfiguration (Kₙ) zu bringen.

## Claims

1. An agricultural round bale press (1) comprising a pressing chamber (2) with which there is associated a pick-up and conveyor device (3) for the feed of crop material, comprising a winding device (5) arranged outside the pressing chamber (2) for wrapping pressed round bales (6) with winding material and comprising a running gear (4) for supporting the round bale press (1) with respect to a ground surface (22), and comprising means (9, 10) for varying a height (h) of the pressing chamber (2) with respect to the ground surface (22), wherein the height (h) of the pressing chamber (2) is adjustable in dependence on operating states of the round bale press (1), **characterised in that** the pressing chamber (2) is adjustable in height (h) between at least one lowered position (PA) providing a facilitated feed of crop to the pressing chamber (2) and at least one raised position (PT) in which there is a sufficient fall between the pressing chamber (2) and the winding device (5) to cause a pressed round bale (6) to roll from the pressing chamber (2) to the winding device (5) under the force of gravity.

2. A round bale press according to claim 1 **characterised in that** the pressing chamber (2) and the pick-up and conveyor device (3) are part of a structural unit which includes in particular also a press frame (7) which mounts the pressing chamber (2) and the pick-up and conveyor device (3).

3. A round bale press according to claim 1 or claim 2 **characterised in that** the running gear (4) is mounted with respect to the press frame (7) by means of a support structure (8) which is connected pivotably to the press frame (7) about an axis of rotation (11) extending horizontally transversely relative to the longitudinal direction (FR) of the round bale press (1).

4. A round bale press according to one of the preceding claims **characterised in that** the means for varying the height (h) of the pressing chamber (2) include an actuator means, preferably having two hydraulic piston-cylinder units (9), whereby ground engagement means (13) associated with the running gear (4) can be moved relative to the pressing chamber (2) to be able to influence the height of the pressing chamber (2) with respect to the ground surface (22).

5. A round bale press according to claim 4 **characterised in that** the actuator means (9) can also be used for the springing and/or damping of the round bale press (1) in the travel mode.

6. A round bale press according to claim 4 or claim 5 **characterised in that** the actuator means (9) can be used to lift the pressing chamber (2) to a sufficient height (h) to avoid unwanted ground contact on the part of components of the round bale press (1).

7. A round bale press according to one of the preceding claims **characterised in that** the pressing chamber (2) has associated therewith an openable structure, in particular a flap (14), which can be opened by means of a control member for the purposes of ejection of a pressed bale (6).

8. A round bale press according to one of claims 1 to 7 **characterised in that** the winding device (5) includes at least one winding table (16) for receiving a round bale (6), which is mounted by means of a holding device (17) with respect to the running gear (4).

9. A round bale press according to claim 8 **characterised in that** the winding table (16) has a receiving means (18) for a round bale (6) and is mounted rotatably with respect to the holding device (17) about an approximately vertically extending axis (19), wherein associated with the winding table (16) is a drive which can cause rotation of the winding table (16) together with a received round bale (6) about the axis (19) in order to wrap the round bale (6) with a stationarily stored winding material.

10. A round bale press according to claim 9 **characterised in that** associated with the holding device (17) are adjusting means, by means of which the winding table (16) can be moved in dependence on the operating situation of the round bale press (1) into various positions (S), in particular into a position (S₁) which is preferred in the pressing operation, a position (S₂) which is preferred in the bale transfer operation, a position (S₃) which is preferred upon transport and/or a position (S₄) which is preferred for maintenance purposes.

11. A round bale press according to one of the preceding claims **characterised in that** the press frame (7) can be coupled by means of a tow bar (20) to a towing vehicle, wherein the tow bar (20) is actively adjustable in respect of height with respect to the press frame (7), in particular by the tow bar (20) being connected to the press frame pivotably about an axis of rotation (12) which extends horizontally transversely relative to the longitudinal direction (FR) of the round bale press (1) and adjustable by means of a control member (10) in the angle thereof relative to the press frame (7).

12. A round bale press according to one of the preceding claims **characterised by** a control device (21) which is operable to put the round bale press (1) in a use-specific configuration (Kₙ) by controlling at least one actuator of the pressing chamber (2) and/or the openable structure (14) and/or the winding table (16) and/or the tow bar (20).

## Revendications

1. Presse agricole à balles rondes (1) comprenant une chambre de pressage (2) à laquelle est associé un équipement de ramassage et de convoyage (3) pour amener du produit de récolte, comprenant un équipement d'enrubannage (5) disposé à l'extérieur de la chambre de pressage (2) pour envelopper des balles rondes pressées (6) avec du matériau d'enrubannage, et comprenant un châssis (4) pour donner appui à la presse à balles rondes (1) sur un terrain (22), et comprenant des moyens (9, 10) pour modifier la hauteur (h) de la chambre de pressage (2) par rapport au terrain (22), la hauteur (h) de la chambre de pressage (2) étant réglable en fonction d'états de fonctionnement de la presse à balles rondes (1), **caractérisée en ce que** la chambre de pressage (2) est réglable en hauteur (h) entre au moins une position abaissée (PA), dans laquelle l'amenée de produit à la chambre de pressage (2) est facilitée, et au moins une position relevée (PT), dans laquelle il existe entre la chambre de pressage (2) et l'équipement d'enrubannage (5) une pente suffisante pour faire rouler sous l'action de la gravité une balle ronde pressée (6) de la chambre de pressage (2) vers l'équipement d'enrubannage (5).

2. Presse à balles rondes selon la revendication 1, **caractérisée en ce que** la chambre de pressage (2) ainsi que l'équipement de ramassage et de convoyage (3) font partie d'une unité structurelle qui comprend en particulier aussi un bâti de pressage (7) recevant la chambre de pressage (2) ainsi que l'équipement de ramassage et de convoyage (3).

3. Presse à balles rondes selon la revendication 1 ou 2, **caractérisée en ce que**, par rapport au bâti de pressage (7), le châssis (4) est monté au moyen d'une structure d'appui (8) qui est reliée à pivotement au bâti de pressage (7) autour d'un axe de rotation (11) s'étendant horizontalement transversalement à la direction longitudinale (FR) de la presse à balles rondes (1).

4. Presse à balles rondes selon une des revendications précédentes, **caractérisée en ce que** les moyens pour modifier la hauteur (h) de la chambre de pressage (2) comprennent un ensemble actionneur, de préférence deux ensembles hydrauliques piston-cylindre (9), ce qui permet de déplacer des moyens de prise au sol (13) associés au châssis (4) par rapport à la chambre de pressage (2) afin de pouvoir influer sur la hauteur de la chambre de pressage (2) par rapport au terrain (22).

5. Presse à balles rondes selon la revendication 4, **caractérisée en ce que** l'ensemble actionneur (9) peut aussi être mis en oeuvre pour la suspension et/ou l'amortissement de la presse à balles rondes (1) en régime de marche.

6. Presse à balles rondes selon la revendication 4 ou 5, **caractérisée en ce que** l'ensemble actionneur (9) est utilisable pour lever la chambre de pressage (2) à une hauteur (h) suffisante pour éviter un contact indésirable de composants de la presse à balles rondes (1) avec le sol.

7. Presse à balles rondes selon une des revendications précédentes, **caractérisée en ce qu'**à la chambre de pressage (2) est associée une structure ouvrable, en particulier une trappe (14) qui, au moyen d'un organe de positionnement, peut s'ouvrir dans le but d'éjecter une balle pressée (6).

8. Presse à balles rondes selon une des revendications 1 à 7, **caractérisée en ce que** l'équipement d'enrubannage (5) comprend, pour recevoir une balle ronde (6), au moins une table d'enrubannage (16) qui est montée par rapport au châssis (4) au moyen d'un équipement de retenue (17).

9. Presse à balles rondes selon la revendication 8, **caractérisée en ce que** la table d'enrubannage (16) comporte un moyen de réception (18) pour une balle ronde (6) et est montée en rotation par rapport à l'équipement de retenue (17) autour d'un axe (19) s'étendant sensiblement verticalement, à la table d'enrubannage (16) étant associé un moyen d'entraînement qui permet de faire tourner la table d'enrubannage (16) conjointement avec la balle ronde reçue (6) autour de l'axe (19) pour envelopper la balle ronde (6) avec un matériau d'enrubannage monté fixe.

10. Presse à balles rondes selon la revendication 9, **caractérisée en ce qu'**à l'équipement de retenue (17) sont associés des moyens de positionnement qui, en fonction de la situation de fonctionnement de la presse à balles rondes (1), permettent d'amener la table d'enrubannage (16) dans diverses positions (S), en particulier dans une position (S₁) préférée lors du pressage, dans une position (S₂) préférée lors de la dépose de balle, dans une position (S₃) préférée lors du transport et/ou dans une position (S₄) préférée pour les besoins de l'entretien.

11. Presse à balles rondes selon une des revendications précédentes, **caractérisée en ce que** le bâti de pressage (7) peut être accouplé au véhicule tracteur au moyen d'un timon (20), le timon (20) étant réglable activement en hauteur par rapport au bâti de pressage (7), en particulier par le fait que le timon (20) est relié à pivotement au bâti de pressage (7) autour d'un axe de rotation (12) s'étendant horizontalement transversalement à la direction longitudinale (FR) de la presse à balles rondes (1) et est réglable sur le plan de son angle par rapport au bâti de pressage (7) au moyen d'un organe de positionnement (10).

12. Presse à balles rondes selon une des revendications précédentes, **caractérisée par** un équipement de commande (21) qui est utilisable pour amener la presse à balles rondes (1) dans une configuration (Kₙ) spécifique à son usage en actionnant au moins un ensemble actionneur de la chambre de pressage (2) et/ou la structure ouvrable (14) et/ou la table d'enrubannage (16) et/ou le timon (20).
